Europäisches Patentamt

European Patent Office

Office européen des brevets

(11) Publication number: **0 365 101**
**A1**

## (12) EUROPEAN PATENT APPLICATION

(21) Application number: 89202641.0

(22) Date of filing: 19.10.89

(51) Int. Cl.⁵: **C08L 67/00** , //C09K19/38

(30) Priority: 21.10.88 NL 8802593

(43) Date of publication of application:
25.04.90 Bulletin 90/17

(84) Designated Contracting States:
AT BE CH DE ES FR GB GR IT LI NL SE

(71) Applicant: STAMICARBON B.V.
Mijnweg 1
NL-6167 AC Geleen(NL)

(72) Inventor: **Koning, Cornelis Eme**
**Parkstraat 18**
**NL-6436 EL Schinnen(NL)**
Inventor: **Kingma, Johannes Albert Josephus**
**Maria**
**Mesdagstraat 11**
**NL-6165 VH Geleen(NL)**
Inventor: **Prinsen, Ludwig**
**Liniestraat 37**
**B-3460 Halen(BE)**

(54) Liquid-crystalline polymer composition.

(57) The invention relates to a polymer composition containing at least 60% (wt) of a liquid-crystalline polymer and at most 40% (wt) of a polyhydroxy ether. The polymer composition allows itself to be easily processed above 250□C without thermal degradation of the polyhydroxy ether and has excellent mechanical properties perpendicular to the direction of orientation of the liquid-crystalline polymer.

FIG. 1b

519 x

EP 0 365 101 A1

## LIQUID-CRYSTALLINE POLYMER COMPOSITION

The invention relates to a polymer composition based on a liquid-crystalline polymer.

Liquid-crystalline polymers are aromatic polymers characterized in that in an organic solvent or in their melted state these polymers show a meso or nematic phase. Liquid-crystalline polymers have frequently been described in patent literature and are already manufactured on a commercial scale, for instance Vectra[R], Xydar[R].

Characteristic properties of these polymers are for instance the high mechanical strength and rigidity and the very low thermal expansion coefficient. Moreover, they show chemical resistance, a high temperature resistance, and they are intrinsically flame-suppressant. The good mechanical properties stem from the high degree of orientation of the polymer chains in the melt or in solution.

In the processing of such polymers, particularly with polyesters with a liquid-crystalline behaviour, anisotropy occurs under the influence of shearing forces, so that the strength perpendicular to the direction of processing or orientation lags far behind the strength in the direction of processing or orientation.

A solution to this is described in EP-A-072210. In that patent specification moulding compounds are described made from liquid-crystalline polymers in which the strength in the direction crosswise to the direction of processing or orientation of the polymer chains has been improved. This improvement is achieved in that a moulding compound is produced from a laminate built up from a plurality of layers of liquid-crystalline polymer. The laminate shows multiaxial orientation, so that the mechanical properties in the direction of orientation as well as in transverse direction are equivalent.

A disadvantage of the moulding compounds thus obtained, from the laminate according to EP-A-722101, is that the mechanical properties have improved only in transverse direction in the plane of orientation of the polymer chains. The mechanical properties perpendicular to the laminate are still insufficient, so that under mechanical loads perpendicular to the laminate signs of delamination occur. A second disadvantage is that the production of moulding compounds from the laminate can take place only by means of vacuum forming or thermoforming.

The object of the invention is to provide a polymer composition with articles obtained from the polymer composition having excellent mechanical properties in all directions, and which polymer composition can be processed with the conventional extrusion and injection moulding equipment.

This object is achieved in that the polymer composition is characterized in that it contains:

a. 60-99.5% (wt) of a liquid-crystalline polymer

b. 0.5-40% (wt) of a polyhydroxy ether.

It has surprisingly been found that articles produced from the polymer composition according to the invention not only have excellent mechanical properties, in longitudinal direction as well as perpendicular thereto, but also that the liquid-crystalline character of the polymer composition is not interfered with. Also, it has been found that the processing characteristics of the polymer composition according to the invention in respect of the conventional injection moulding equipment are excellent.

It should be noted that the addition of a polyhydroxy ether to a polyester is described in EP-A-0024245. That patent specification describes a polymer composition consisting of a polyarylate, a non-crystalline aliphatic polyester and a thermoplastic polymer chosen from the group: polyurethane, polyvinyl chloride, polyaryl ether, polyether ester block copolymer or a polyhydroxy ether. In that patent specification no liquid-crystalline polymers are mentioned.

In US-A-3329740 a thermoplastic polymer composition is described with a polyhydroxy ether being added to a polyester of 1,4 butanediol and terephthalic acid. The processing temperature of this composition is limited to 220oC. The polymer composition according to the invention is processed at much higher temperatures (> 250oC), so that more flexible shaping is possible.

In EP-A-0231606 a polyester capable of forming an anisotropic phase in the molten state is blended with an epoxy compound. Such an epoxycompound may contain a low molecular weight phenoxycompound. This compound is added to improve the heat stability of the polyester. In the patent there is no mentioning of improvement of the mechanical properties perpendicular to the orientation of the polymer.

Moreover the basis chemical structures of the phenoxy resins as used herein may be similar to that of epoxy resin as used on EP-A-0288398. However phenoxy resins are a separate and unique class of resins differing from epoxies in at least the following important characteristics:

a) Phenoxy resins are tough and durable thermoplastics. Their average molecular weigh ranges from 15,000 to 75,000, preferably from 20,000 to 50,000 compared with 240 to 13,000 for conventional epoxy resins with crosslinks on polymerisation.

b) Phenyxoy resins do not have terminal, highly reactive epoxy groups and are thermally stable materials with a long shelf life.

c) Phenoxy resins can be used without further chemical conversion. For their use, no catalysts, curing agents and/or hardeners are required whereas catalysts, curing agents and/or hardeners are required for the use of epoxy resins.

It has surprisingly been found that, despite the high processing temperature, there is no thermal degradation of the polymer composition, in particular of the polyhydroxy ether.

Suitable liquid-crystalline polymers are in principle all polymers showing anisotropy in the melt or in solution. Performance is given to the use of those liquid-crystalline polymers that can be processed from the melt, the so-called thermotropic polymers.

Anisotropy is understood to mean a high degree of orientation caused by parallel arrangement of the polymer chains. Polymers with anisotropic behaviour have excellent mechanical properties in the direction of orientation of the polymer chains. The mechanical properties perpendicular to the direction of orientation differ considerably therefrom. Generally, the mechanical properties perpendicular to the polymer chains are in absolute values lower by a factor of 10-20, depending on the chemical structure of the polymer and depending on the degree of anisotropy.

Details of the circumstances under which anisotropy may occur in the melt are known from J. Preston; Die Angewandte Makromoleculaire Chemie 109/110 (1982) 1-9.

Liquid-crystalline polymers and the production thereof are known per se. For instance from:
BE-A-828935; BE-A-828936; NL-A-7505551; DE-C-2520819; DE-C-2520820; DE-C-2722120; DE-C-2834535; DE-C-2834536; DE-C-2834537; JP-A-43223; US-A-3,991,013; 3,884,876; 3,974,250; 3,991,014; 4,057,597; 4,066,620; 4,067,852; 4,075,262; 4,083,829; 4,093,595; 4,118,372; 4,130,545; 4,130,702; 4,146,702; 4,153,779; 4,156,070; 4,159,365; 4,161,470; 4,169,933; 4,181,792; 4,183,895; 4,184,996; 4,188,476; 4,201,856; 4,219,461; 4,224,433; 4,230,817; 4,232,143; 4,232,144; 4,238,598; 4,238,599; 4,238,600; 4,242,496; 4,245,082; 4,245,084; 4,247,514; 4,256,624; 4,265,802; 4,269,965; 4,272,625; 4,279,803; 8,284,757; 4,285,852; 4,287,332; 4,294,955; 4,299,756; 4,311,824; 4,314,073; 4,318,841; 4,318,842; 4,330,457; 4,332,759; 4,337,190; 4,337,191; 4,339,375; 4,341,688; 4,346,208; 4,347,349; 4,351,917; 4,351,918; 4,355,132; 4,355,133; 4,355,134; 4,359,569; 4,360,658; 4,362,777; 4,370,466; 4,371,660; 4,375,530; 4,381,389; 4,348,016; 4,393,191; 4,394,498; GB-A-1,568,541; EP-A-24,499 and 45,499.

Thermotropic liquid-crystalline polymers are generally built up from rigid aromatic units. These units are understood to be monomers containing at least one aromatic ring (Ar), for instance

(a) $- O - Ar - \overset{\overset{O}{\|}}{C} - $ ;

(b) $- O - Ar - O - $ ;

(c) $- \overset{\overset{O}{\|}}{C} - Ar - \overset{\overset{O}{\|}}{C} - $ ; Depending on the application of the moulding compound produced from the polymer composition according to the invention, such a polymer may yet contain amide and/or carbonate groups.

The pattern of properties of liquid-crystalline polymers in the polymer composition according to the invention can be varied by chemical modifiation of the polymer. This can be achieved, for instance, by incorporating alkyl groups with 1-3 carbon atoms or halogen atoms in the aromatic ring. Examples of such modifications are described in US-A-4,279,803; US-A-4,238,599 and US-A-4,159,365.

Another possibility of modifying the pattern of properties of the liquid-crystalline polymer can be obtained by mixing the polymer with a thermoplastic polymer as described, for instance, in EP-A-30417.

The polymer composition according to the invention contains, in addition to the liquid-crystalline polymer, 0.5-40% (wt) of a polyhydroxy ether.

A polyhydroxy ether is a polymer with the formula (I).

$[ - D - O - \overset{''}{E} - O - ]n$     (I)

where D is a radical residue of a dihydric phenol; $E''$ a radical residue of an epoxide, chosen from mono and diepoxides, with 1 or 2 hydroxyl groups and where n is a natural number of at least 30 and preferably between 80 and 120. For the production of polyhydroxy ethers reference is made to EP-A-0024245, page 28, and to W.F. Hale, in Encyclopedia of Polymer Science and Engineering, 1st impression, volume 10, pp 111-122. The polyhydroxy ether is preferably a phenoxy resin derived from 2,2-bis-(4-hydroxyphenyl)-propane, bisphenol A and epichlorohydrine.

The weight ratio (a:b) between the two polymers in the polymer composition according to the invention is preferably between 99/1 and 80/20. More particularly between 99/1 and 90/10.

The polymer composition according to the present invention can be prepared by mixing the two components in a mixing device. In the process any additives such as, for instance, stabilizers, slip agents, lubricants and/or solvents, colourants, pigments, fillers, etc. can be added in any known manner and in any desired order of mixing the components. It is almost a matter of course that the components can be mixed also all at once. Known mixing devices suited for this purpose are Banbury mixers and single or twin-screw extruders.

The invention is further elucidated with the following examples without being limited thereto.

Examples I-IV + comparative examples A, B

In the production of the polymer composition the following materials were used:
- Vectra[R] A 900, a liquid-crystalline polymer of the firm of Celanese. Before processing, this polymer was dried for 4 hours at 150¤C and 200 mbar in a dry nitrogen atmosphere.
- UCAR[R] phenoxy resin, Union Carbide, a resin derived from bisphenol-A and epichlorohydrin. Before processing the resin was dried in an oven at 80¤C for 4 hours.
- Rodrun[R] LC 5000, a liquid-crystalline polymer of the firm of Unitika, dried for 4 hours, at 120¤C and 200 mbar.

The said polymers were mixed in the proportions mentioned in table 1 in a Schwabenthan extruder at 270¤C. The screw diameter was 30 mm.

Table 1

| Component | ex I | ex II | ex III | ex IV | ex A | ex B |
|---|---|---|---|---|---|---|
| Vectra[R] | 95 | 90 | -- | -- | 100 | -- |
| UCAR[R] | 5 | 10 | 10 | 5 | -- | -- |
| Rodrun | -- | -- | 90 | 95 | -- | 100 |

From the extruder a film (12 * 0.5 mm) was obtained.
- A tensile test bar was machined according to ASTM D1822 type L. With this tensile test bar the impact resistance (IZOD 150 R180) and the stress at fracture was determined according to ASTM D 790. The drawing speed was 3.5 m/s.

The results perpendicular to the direction of orientation of the polymer chains are mentioned in table 2.

Table 2

| ex. | E (fracture) (MPa) | Impact KJ/m$^2$ |
|---|---|---|
| I | 10 | 53 |
| II | 9 | 48 |
| III | 13 | 36 |
| IV | 15 | 42 |
| A | 6 | 35 |
| B | 10 | 21 |

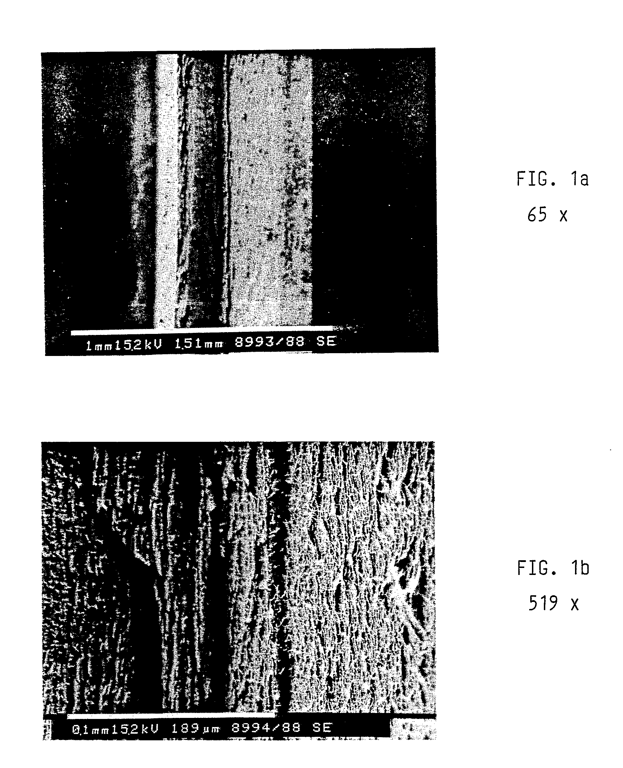

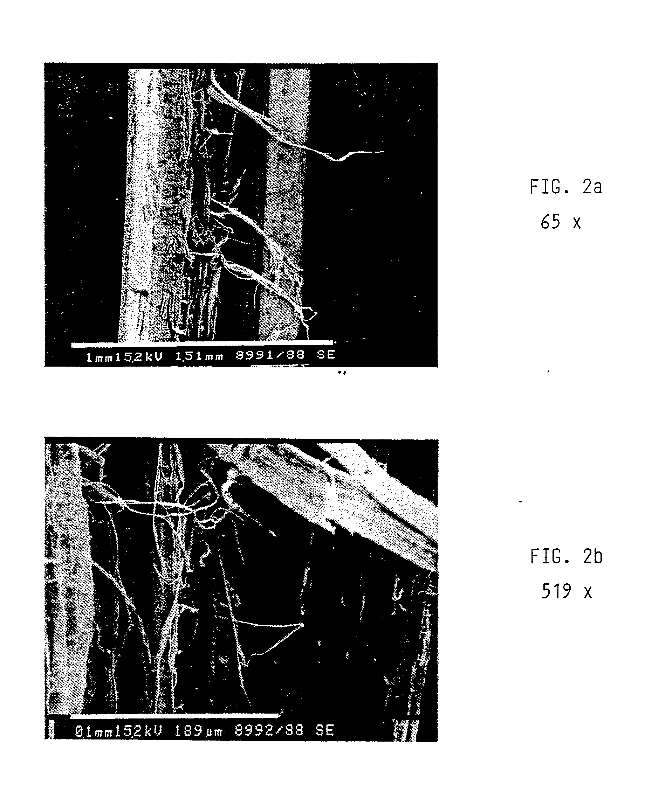

Of the fracture faces of the tensile test bars of example I and comparative example A, SEM (Scanning Electron Microscopy) pictures were made. The resulting pictures are shown in Fig. 1 a, b and Fig. 2 a,b. (example 1, respectively comparative example A). The magnification at a, 65 times and at b, 519 times.

Figure 1 shows that the polymer composition according to the invention has a fine densely packed fibrillar structure. This is in contrast with Fig. 2 (100% vectra[R]), which clearly shows that there are signs of delamination.

**Claims**

4

1. Polymer compositions based on a liquid-crystalline polymer, characterized in that the polymer composition contains 60-99.5% (wt) of a liquid-crystalline polymer and 0.5-40% (wt) of a polyhydroxy ether.

2. Polymer compositions according to claim 1, characterized in that the composition contains 1-20% (wt) of a polyhydroxy ether.

3. Polymer composition according to claim 2, characterized in that the composition contains 1-10% (wt) of a polyhydroxy ether.

4. Polymer composition according to any one of claims 1-3, characterized in that the polyhydroxy ether is a phenoxy resin derived from 2,2-bis-(4-hydroxyphenyl)-propane, bisphenol A and epichlorohydrin.

5. Article obtained from the polymer composition according to any one of claims 1-4.

6. Film obtained from the polymer composition according to any one of claims 1-4.

7. Polyester composition as described in the specification and in the examples.

FIG. 1a
65 x

FIG. 1b
519 x

EP 0 365 101 A1

FIG. 2a
65 x

FIG. 2b
519 x

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 231 606 (POLYPLASTICS) * Page 2, lines 7-23; page 3, lines 1-7; page 4; page 5, lines 1-17; page 11, lines 9-18; page 12, lines 13-17; page 19, paragraph 6; claims 1-5 * | 1-4,7 | C 08 L 67/00 // C 09 K 19/38 |
| Y,D | EP-A-0 024 245 (UNION CARBIDE) * Page 1, lines 3-16; page 4, lines 10-26; claims 1-3,5 * | 1-4,7 | |
| X,P | EP-A-0 288 398 (EASTMAN KODAK) * Page 2, lines 5-7,53-57; page 3, lines 1-22,50-65; page 4, lines 4-29; claims 1-16 * | 1-4,7 | |

TECHNICAL FIELDS SEARCHED (Int. Cl.5)

C 08 L

The present search report has been drawn up for all claims

| Place of search | Date of completion of the search | Examiner |
|---|---|---|
| THE HAGUE | 17-11-1989 | BOULON A.F.J. |

EPO FORM 1503 03.82 (P0401)